# EUROPÄISCHE PATENTSCHRIFT

(11) **EP 2 653 408 B1**
(45) Veröffentlichungstag und Bekanntmachung des Hinweises auf die Patenterteilung: **04.03.2015**
(21) Anmeldenummer: 13152153.6
(22) Anmeldetag: 22.01.2013
(51) Int. Cl.: B65G 1/02

(54) **Anschlag für eine Auflage eines Regals**
Stop for a support of a shelf
Butée pour une tablette d'étagère

(30) Priorität: 20.04.2012 DE 102012103514
(43) Veröffentlichungstag der Anmeldung: 23.10.2013
(73) Patentinhaber: BITO-Lagertechnik Bittmann GmbH, 55590 Meisenheim (DE)
(72) Erfinder: Kemperdick, Artur, 55758 Niederwörresbach (DE)
(74) Vertreter: Richardt Patentanwälte PartG mbB

(56) Entgegenhaltungen:
- AU-A1- 2008 201 216
- FR-A1- 2 897 603
- US-A- 3 138 262

## Beschreibung

Die Erfindung betrifft einen Anschlag für eine Auflage eines Regals, ein Auflage, einen Querverbinder für mehrere Anschläge sowie ein Anschlagssystem.

Aus dem Stand der Technik sind Regale bekannt, welche aus sogenannten Traversen bestehen, welche parallel zueinander angeordnet sind. Diese Traversen werden durch Regalpanele miteinander quer verbunden. Auf den Regalpanelen können dann zu lagernde Produkte wie Paletten oder allgemein Stückgut abgelegt werden. Um zu verhindern, dass bei einer Beschickung des Regals von vorne (in Erstreckungsrichtung der Regalpanele gesehen) auf den Regalpanelen abgesetztes Stückgut nach hinten vom Regal fallen kann, ist es bekannt, Anschläge für die Regalpanele vorzusehen. Beispielsweise offenbart die FR 2897603 einen gattungsgemäßen Anschlag zur Montage in einem Regal. Dazu verfügt der Anschlag über zwei Anschlagseiten, welche über zumindest zwei Strukturen miteinander verbunden sind. Die Verbindungsstrukturen sind in Form von Auslegern auch zur Montage des Anschlags an einem Regal ausgebildet.

Die DE 9106901U1 offenbart eine Stell- und Positioniereinheit für zu lagernde und/oder zu transportierende Gegenstände, bestehend aus den Gegenständen angepassten Halteelementen, die auf einer Unterlage angeordnet sind. Die Stell- und Positioniereinheit ist dadurch gekennzeichnet, dass die Halteelemente mit einer lösbaren Steckverbindung auf der Unterlage befestigt sind.

Ebenfalls aus dem Stand der Technik sind sogenannte Tiefenauflagen und Winkelauflagen bekannt, welche ebenfalls dazu dienen, Stückgut in einem Regal aufzunehmen.

Im Folgenden werden all die verschiedenen Arten von Tiefenauflagen, Winkelauflagen, Regalpaneelen und sonstigen aus dem Stand der Technik bekannten Auflagen für Stückgut in einem Regal allgemein als "Auflagen" bezeichnet.

Der Erfindung liegt die Aufgabe zugrunde, einen verbesserten Anschlag für eine Auflage, eine Auflage, einen Querverbinder und ein Anschlagssystem zu schaffen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Anschlag für eine Auflage eines Regals geschaffen, wobei der Anschlag eine Anschlagfläche für auf dem Regalpanel zu lagerndes Stückgut und eine schräg von der Anschlagfläche wegweisende Stützfläche aufweist. Die Anschlagfläche weist an ihrem Ende ein erstes Mittel zur Fixierung des Anschlags an der Auflage und die Stützfläche weist an ihrem Ende ein zweites Mittel zur Fixierung des Anschlags an der Auflage auf. An dem Ende der Stützfläche sind zumindest zwei voneinander beabstandete Stützfüße angeordnet, wobei die Stützfüße zur Abstützung des Anschlags auf der Auflage ausgebildet sind, wobei die Stützfüße zur Anschlagfläche hin weisen. Bei dem zweiten Mittel zur Fixierung des Anschlags handelt es sich erfindungsgemäß um eine an der Stützfläche angeordnete zweiteilige Nase, wobei der erste Teil der Nase durch eine Verlängerung der Stützfläche gebildet wird, wobei der zweite Teil der Nase an der Verlängerung angeordnet ist und in Richtung der durch den Anschlag definierten Ebene weist. Anschaulich gesprochen könnte sich hieraus beispielsweise ein L-förmiger Haken als das zweite Mittel zur Fixierung des Anschlags ergeben, wobei der erste Teil der L-Form die eigentliche Rastfunktion und die Fixierung des Anschlags in dem Regalpanel übernimmt. Der zweite Teil der L-Form dient als Montagehilfe und ermöglicht es, nach einem Einsetzen des ersten Mittels zur Fixierung des Anschlags in die Auflage und einem einfachen Schwenkvorgang des Anschlags über eine Art Selbstzentrierung den Anschlag endgültig mit der Auflage zu verrasten. Dadurch wird insgesamt ein Montagevorgang erleichtert.

Ausführungsformen der Erfindung könnten den Vorteil haben, dass mit sehr geringem Materialaufwand ein dennoch hochstabiler Anschlag für ein Regalpanel geschaffen werden kann, welcher in der Lage ist, auch hohe, auf die Anschlagfläche wirkende Kräfte effektiv auf die Auflage, z.B. ein Regalpanel abzuleiten. Dies könnte insbesondere dann von großer Relevanz sein, wenn das auf der Auflage abzusetzende Stückgut mit Schwung gegen den Anschlag befördert wird. Die Anschlagfläche nimmt zunächst die auftretende Kraft auf und leitet diese über die Schräge der zum Regalpanel weisende Stützfläche auf die Auflage ab. Durch die schräg von der Anschlagfläche wegweisende Stützfläche wird damit einer ungewollten Verformung der Anschlagfläche entgegengewirkt. Da nun am Ende der Stützfläche zwei voneinander beabstandete Stützfüße angeordnet sind, kann die auf die Stützfläche wirkende Kraft flächig auf das Regalpanel abgeleitet werden. Da jedoch die Stützfüße zur Anschlagfläche hin weisen, ist es trotz einer großen Fläche, über welche die Kraft übertragen werden kann, eine minimierte Baugröße des Anschlags gewährleistet.

Durch die beiden Mittel zur Fixierung des Anschlags ist es außerdem möglich, in einfacher Weise durch Einklicken des Anschlags in das Regalpanel eine Montage zu gewährleisten.

Nach einer Ausführungsform der Erfindung ist zwischen den Stützfüßen das zweite Mittel zur Fixierung des Anschlags angeordnet. Vorzugsweise sind die beiden Stützfüße symmetrisch zu dem Mittel zur Fixierung des Anschlags angeordnet. Dies könnte den Vorteil haben, dass selbst bei einer nicht senkrecht auf die Anschlagfläche wirkenden Kraft ein Herausreißen des Anschlags aus dem Regalpanel vermieden wird. Das zweite Mittel zur Fixierung des Anschlags sichert das Herausreißen oder Entfernen des Anschlags aus der Auflage gleichmäßig gegenüber Kräften, welche unsymmetrisch auf einen der beiden Stützfüße wirken.

Nach einer Ausführungsform der Erfindung erstreckt sich die Verlängerung beispielsweise parallel zur Stützfläche.

Nach einer Ausführungsform der Erfindung schließen die Stützfläche und die Stützfüße einen ersten Winkel ein, wobei ein zwischen der Verlängerung und dem zweiten Teil der Nase gebildeter zweiter Winkel einen Wert aufweist, welcher zwischen dem Wert des ersten Winkels und dem Wert des ersten Winkels plus 90° liegt. Dadurch ergibt sich eine optimale Möglichkeit, mit reduziertem Kraftaufwand dennoch sicher den Anschlag mit dem Regalpanel zu verrasten.

Nach einer Ausführungsform der Erfindung sind die Enden des zweiten Teils der Nase abgerundet, wobei die Abrundung durch zumindest einen Mittelpunktswinkel beschreibbar ist, wobei sich der zu dem Mittelpunktswinkel zugehörige Mittelpunkt auf der Erstreckungsfläche des zweiten Teils der Nase befindet. Dies könnte beispielsweise die obig beschriebene Zentrierung des Anschlags beim Einsetzen und Verrasten mit der Auflage unterstützen.

Nach einer Ausführungsform der Erfindung umfasst das erste Mittel zur Fixierung des Anschlags eine Rastzunge, wobei die Rastzunge von der Stützfläche wegweisend an dem Ende der Anschlagfläche ausgeformt ist. Wird nun diese Rastzunge in eine gegenstückige Aussparung der Auflage eingehängt, hintergreift die Rastzunge die Auflage. Wirkt auf die Anschlagfläche eine entsprechende Kraft, kann durch die Auflagefläche, welche zwischen Rastzunge und Auflage gebildet wird, flächig diese Kraft auf die Auflage übertragen werden. Durch die Rastzunge könnte also weiter unterstützend verhindert werden, dass der Anschlag aus der Auflage herausgehoben oder gar herausgerissen werden könnte. Durch die Kombination von Rastzunge auf der einen Seite und schräg von der Anschlagfläche wegweisende Stützfläche auf der anderen Seite wird also insgesamt ermöglicht, dass mit minimalem Materialaufwand bezüglich des Anschlags eine maximale Stabilität des Anschlags gegenüber Deformation und Herausreißen aus der Auflage gewährleistet wird.

Nach einer Ausführungsform der Erfindung finden sich seitlich von der Rastzunge jeweils freie Enden der Anschlagfläche. Vorzugsweise ist die Rastzunge zentriert zur Anschlagfläche ausgeformt. Dadurch kommt im Bereich der freien Enden der Anschlagfläche die Anschlagfläche auf der Auflage zum Liegen. Auch dadurch wird weiter gewährleistet, dass bei einer schrägen, das heißt seitwärts gerichteten Krafteinwirkung auf den Anschlag, der Anschlag nicht durch eine seitliche Kippbewegung aus den entsprechenden Rastverbindungen und damit aus der Auflage in einfacher Weise herausgehoben oder gar herausgerissen werden kann.

Durch das Vorsehen der freien Enden der Anschlagfläche auf der einen Seite und auf der anderen Seite der Stützfüße wird damit wiederum in synergistischer Weise eine hochstabile Anordnung des Anschlags bezüglich der Auflage selbst im Falle seitlich einwirkender Kräfte gewährleistet.

Nach einer Ausführungsform der Erfindung ist zwischen der Anschlagfläche und der Rastzunge ein dritter Winkel gebildet, wobei der dritte Winkel einen Wert zwischen 90° und 130° aufweist. Vorzugsweise sollte es jedoch so sein, dass die Rastzunge flächig auf der Unterseite der Auflage zu liegen kommt. Ist der Winkel zwischen Auflagenoberfläche und Anschlagfläche nicht exakt 90°, sondern beispielsweise ein Winkel größer als 90°, sollte der entsprechende dritte Winkel so gewählt sein, dass die Rastzunge flächig mit der Unterseite der Auflage eine formschlüssige Verbindung eingehen kann (d.h. ein Formschluss in Richtung senkrecht zur Unterseite und damit zur Oberseite der Auflage). Die formschlüssige Verbindung sollte dabei gleichmäßig über die gesamte Oberfläche der Rastzunge vorhanden sein.

In einer weiteren Ausführungsform der Erfindung sind die Anschlagfläche und die Stützfläche ausschließlich über eine Verbindungsfläche miteinander verbunden, wobei die Verbindungsfläche ausschließlich an dem Ende der Anschlagfläche, welche von dem ersten Mittel zur Fixierung des Anschlags abgewandt ist und dem Ende der Stützfläche, welches von dem zweiten Mittel zur Fixierung des Anschlags abgewandt ist, angeordnet ist. Die Verbindungsfläche kann einteilig oder mehrteilig sein, ist jedoch nicht an den Seiten der Anschlagfläche und der Stützfläche angeord net.

Dies ermöglicht es, nach optimierter Wahl der Größe der Stützfüße den Abstand zwischen dem der Auflage zugewandten Ende der Anschlagfläche und dem vorderen, der Anschlagfläche zugewandten Ende der Stützfüße zu variieren. In anderen Worten kann durch die Wahl der Verbind ungsfläche der Abstand zwischen Anlagefläche und Stützfläche frei gewählt werden. Je nachdem, wie groß die Stützfüße sind, kann also der Abstand zwischen Anschlagfläche und Stützfläche variiert werden. In der kleinstmöglichen Ausgestaltung ist die Verbindungsfläche nicht vorhanden und die Stützfläche ist unmittelbar direkt an der Anschlagfläche angeordnet.

Nach einer Ausführungsform der Erfindung handelt es sich bei der Verbindungsfläche um eine relativ zu den Stützfüßen waagrechte Verbindungsfläche. Vorzugsweise sind die Stützfüße parallel zum Regalpanel angeordnet, um auch hier wiederum eine kraftschlüssige Verbindung zwischen der Oberfläche der Auflage und den Stützfüßen in Form einer flächigen Auflage der Stützfüße auf der Auflage zu ermöglichen.

Nach einer weiteren Ausführungsform der Erfindung weist die Verbindungsfläche eine Aussparung auf, wobei die Aussparung zur Fixierung eines Querverbinders ausgebildet ist zur Verbindung mehrerer Anschläge untereinander. Ein solcher Querverbinder könnte also beispielsweise über diese Aussparung mit dem Anschlag verrastet werden. Da der Querverbinder mehrere Anschläge untereinander verbindet, wird dadurch die Gesamtstabilität der Anschläge insgesamt erhöht. Die Stabilitätserhöhung wirkt dabei sowohl bei in Richtung senkrecht zur Anschlagfläche wirkenden Kräften, als auch bei seitlich auf die Anschlagfläche wirkenden Kräften. Letztere werden insbesondere durch die Querverstrebung mehrerer Anschläge über diesen Querverbinder besonders gut aufgenommen.

Nach einer Ausführungsform der Erfindung handelt es sich bei dem Anschlag um ein Metallbiegeteil. Aufgrund der obig beschriebenen einzelnen Komponenten ist es möglich, zunächst ein Metallteil in einem Stanzverfahren als Rohling herzustellen, um anschließend durch eine Anzahl von Biegevorgängen den endgültigen Anschlag zurechtzubiegen und herzustellen. Durch die Wahl des entsprechenden Metallmaterials, dessen Dicke, der Größe der Verbindungsfläche und der Art und Weise, wie die Stützfläche von der Verbindungsfläche wegsteht, ist es möglich, ein insgesamt zwar leicht federndes, jedoch dennoch hochstabiles Werkstück zu erhalten, welches mechanische Eigenschaften in genau vordefinierter Weise aufweist. Ferner hat dies den Vorteil, dass größenmäßige Veränderungen des Anschlags einfach realisierbar sind. Grundsätzlich genügt hier die Verwendung eines breiteren Zuschnitts des Rohlings und ein anschließendes Kanten - hierfür wird unabhängig von der Größe des Zuschnitts immer nur ein und das selbe Werkzeug zum Kanten benötigt. Die Verwendung unterschiedlicher Formen wie z.B. beim Kunststoffspritzgussverfahren entfällt.

Nach einer Ausführungsform der Erfindung handelt es sich bei der Auflage um ein Regalpaneel oder um eine Tiefenauflage oder um eine Winkelauflage.

In einem weiteren Aspekt betrifft die Erfindung eine Auflage mit ersten Aussparungen zur rastenden Aufnahme eines Anschlags, wie obig beschrieben.

Nach einer Ausführungsform der Erfindung weist die Auflage ferner zwei der Aussparungen zur rastenden Aufnahme eines weiteren Anschlags, wie er oben beschrieben wurde, auf, wobei die ersten und die zweiten Aussparungen so zueinander angeordnet sind, dass die Stützflächen der aufzunehmenden Anschläge einander unmittelbar gegenüberliegen, wobei die ersten und zweiten Aussparungen so beabstandet sind, um ein Sprinklerrohr zwischen den aufzunehmenden Anschlägen und der Auflage aufzunehmen. Dies könnte insbesondere im Falle beidseitig zu beschickender Regale relevant sein, wobei in diesem Fall entsprechende Regalpanele von beiden Seiten gesehen Anschläge benötigen. Die Anschläge könnten zum Beispiel in der Mitte der Auflage angeordnet sein. Um in diesem Fall Feuerschutzbestimmungen und damit das Vorsehen entsprechender Sprinklerrohre zu gewährleisten, könnten diese Sprinklerrohre in einfacher Weise zwischen den einander benachbarten Anschlägen aufgenommen werden. Hierzu ist es auch möglich, an den Anschlägen entsprechende Rastmittel vorzusehen, sodass das Sprinklerrohr an den Anschlägen fixiert ist.

Nach einer Ausführungsform der Erfindung weist jede der ersten Aussparungen einen ersten Teil und einen zweiten Teil auf, wobei der erste Teil zur Aufnahme des ersten Mittels zur Fixierung des Anschlags und der zweite Teil zur Aufnahme des zweiten Mittels ausgeformt ist, wobei in Richtung vom ersten zum zweiten Mittel hin gesehen die Breite des ersten Teils der Aussparung der Materialdicke des ersten Mittels entspricht. Damit ist im Bereich der Krafteinwirkung eine hohe Materialansammlung seitens der Auflage gewährleistet. Dies erhöht die Gesamtstabilität bei einfacher Montage - denn die Gleichartigkeit von Materialdicke und Breite des ersten Teils der Aussparung ermöglicht ein einfaches "Einfädeln" des ersten Mittels in den ersten Teil der Aussparung.

In einem weiteren Aspekt betrifft die Erfindung einen Querverbinder für mehrere obig beschriebene Anschläge.

Nach einer Ausführungsform der Erfindung weist der Querverbinder eine U-Form auf, wobei die Schenkel des Querverbinders zur vollflächigen Aufnahme auf der Anschlagfläche und der Stützfläche geformt sind. Dadurch ist eine optimale Kraftübertragung zwischen Querverbinder und Anschlag gewährleistet.

In einem weiteren Aspekt betrifft die Erfindung ein Anschlagsystem umfassend eine oder mehrere obig beschriebene Anschläge und einen obig beschriebenen Querverbinder.

Im Folgenden werden bevorzugte Ausführungsformen der Erfindung anhand der Zeichnungen näher erläutert. Es zeigen:
- Figur 1: verschiedene Ansichten eines Anschlags,
- Figur 2: verschiedene bildhaft dargestellte Verfahrensschritte zur Montage eines Anschlags an einem Regalpanel,
- Figur 3: eine perspektivische Ansicht mehrerer Anschläge mit Querverbinder,
- Figur 4: eine schematische Ansicht eines über einen Querverbinder verbundenen Satzes von Anschlägen und Regalpanelen,
- Figur 5: zwei bildhaft dargestellte Verfahrensschritte zur Montage eines Anschlags an einem Regalpanel.

Im Folgenden werden einander ähnliche Elemente mit den gleichen Bezugszeichen gekennzeichnet.

Im Folgenden sie ohne Beschränkung der Allgemeinheit davon ausgegangen, dass es sich bei der Auflage um ein Regalpaneel handelt.

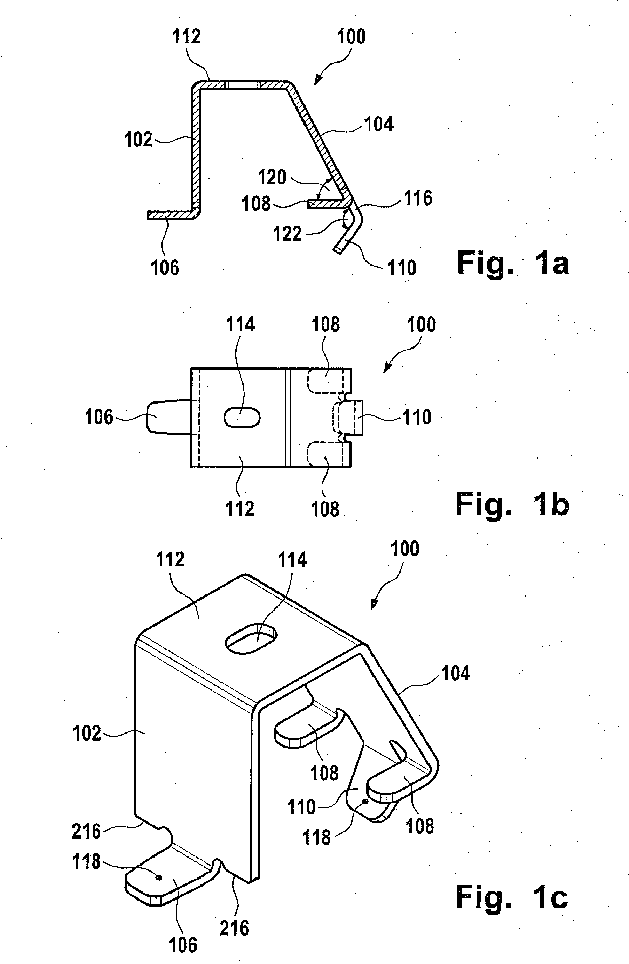

Die Figur 1 a zeigt einen Anschlag 100. In der Figur 1 a ist dabei der Anschlag 100 in einer Querschnittsansicht, in der Figur 1b in einer Ansicht von oben und in Figur 1c in einer perspektivischen Ansicht gezeigt.

Der Anschlag 100 weist eine Anschlagfläche 102 für ein auf einem Regalpanel zu lagerndes Stückgut, sowie eine schräg von der Anschlagfläche wegweisende Stützfläche 104 auf. Die Anschlagfläche 102 weist an ihrem unteren Ende eine Rastzunge 106 auf. Die Stützfläche 104 weist ferner an ihrem unteren Ende ein Rastmittel in Form einer zweiteiligen Nase auf. Der erste Teil 116 der Nase wird durch eine Verlängerung der Stützfläche 104 gebildet und der zweite Teil 110 der Nase ist an der Verlängerung angeordnet und weist in Richtung der durch den Anschlag 100 gebildeten Ebene.

Ferner sind an dem Ende der Stützfläche 104 zwei voneinander beabstandete Stützfüße 108 angeordnet. Diese Stützfüße 108 dienen zur Abstützung des Anschlags 100 auf einem Regalpanel, wobei diese Stützfüße 108 zur Anschlagfläche 102 hinweisen.

Zwischen diesen beiden Stützfüßen 108 ist die Verlängerung der Stützfläche und damit der erste Teil 116 der Nase ausgeformt.

Deutlich erkennbar ist, dass das Ende des zweiten Teils 110 der Nase leicht abgerundet ist. Diese Abrundung ist durch einen sogenannten Mittelpunktswinkel beschreibbar, wobei sich der zu dem Mittelpunktswinkel zugehörige Mittelpunkt 118 auf der Erstreckungsfläche des zweiten Teils 110 der Nase befindet.

Die Rastzunge 106 weist von der Stützfläche 104 weg, wobei seitlich von der Rastzunge 106 jeweils freie Enden der Anschlagfläche 102 ersichtlich sind. Mit diesen freien Enden kann sich die Anschlagfläche 102 auf dem Regalpanel abstützen. Die Stützfläche 104 und die Stützfüße 108 schließen einen Winkel 120 ein. Ein zwischen der Verlängerung (erster Teil der Nase) 116 und dem zweiten Teil der Nase 110 gebildeter Winkel 122 weist einen Wert auf, welcher zwischen dem Wert des Winkels 120 und dem Wert des Winkels (Bezugszeichen 120) plus 90° liegt.

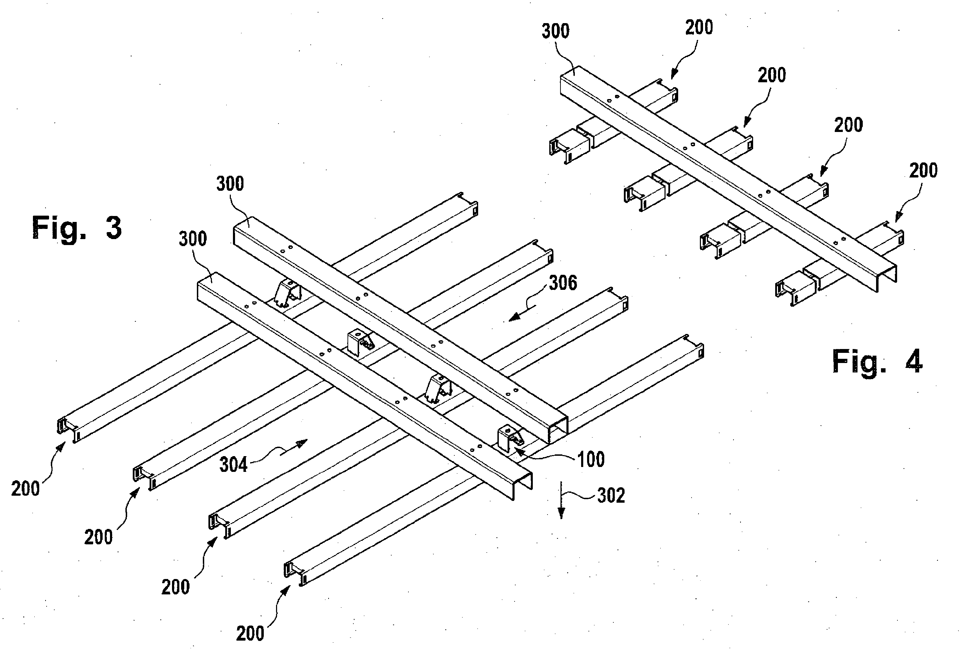

Die Anschlagfläche 102 und die Stützfläche 104 sind über eine Verbindungsfläche 112 miteinander verbunden. Die Verbindung zwischen Anschlagfläche 102 und Stützfläche 104 erfolgt dabei ausschließlich über diese Verbindungsfläche 112. Die Verbindungsfläche 112 weist eine Aussparung 114 auf. Diese Aussparung 114 dient zur Fixierung eines insbesondere bezüglich der Figuren 3 und 4 diskutierten Querverbinders.

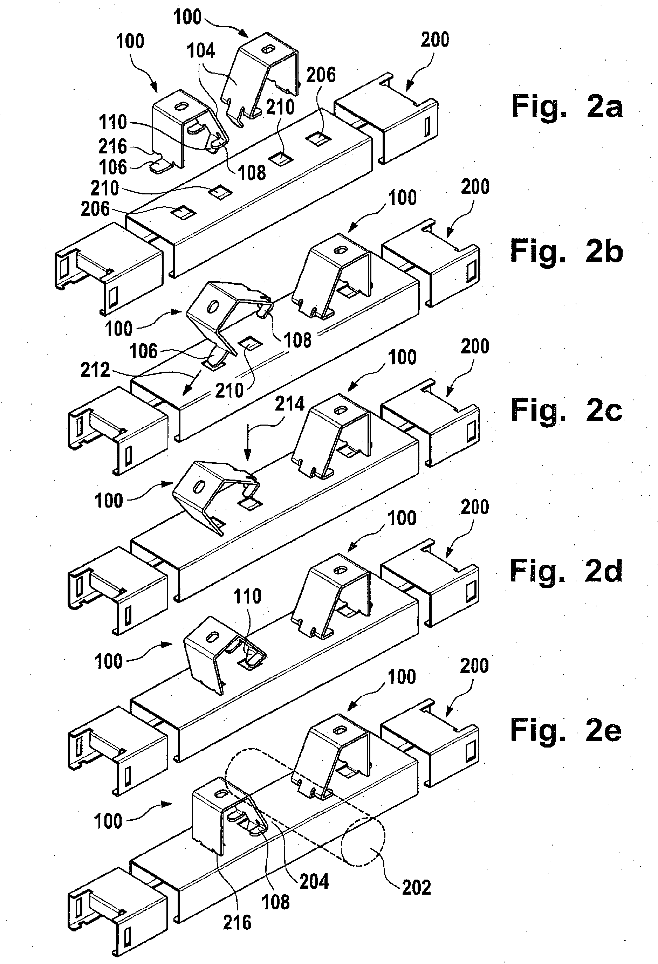

Die Figur 2 zeigt verschiedene Schritte eines Montageverfahrens eines Anschlags 100 für ein Regalpanel 200. Das Montageverfahren ist dabei als perspektivische Ansicht schrittweise in den Figuren 2a - e dargestellt.

In der Figur 2a erfolgt zunächst die Bereitstellung des Regalpanels 200 und einer oder mehrerer Anschläge 100.

In der Figur 2b wurde der Einfachheit halber davon ausgegangen, dass der rechte Anschlag 100 bereits montiert wurde. Aus diesem Grund sei bezüglich der Montage des linken Anschlags 100 auf den rechten Anschlag 100 nicht weiter eingegangen. Erwähnt sei lediglich, dass die Aussparungen 206 und 210 für die linken und rechten Anschläge 100 so am Regalpanel angeordnet sind, dass im montierten Zustand die beiden Stützflächen 104 der beiden Anschläge 100 einander gegenüber zu liegen kommen. Dies ermöglicht es beispielsweise, wie in der Figur 2e gezeigt, ein Sprinklerrohr 202 in den durch die beiden Stützflächen 104 und dem Regalpanel gebildeten Zwischenraum 204 das Sprinklerrohr 202 quer zur Erstreckungsrichtung des Regalpanels 200 zu fixieren oder allgemein aufzunehmen.

Nach der Bereitstellung des linken Anschlags in Figur 2a wird in der Figur 2b die Rastzunge 106 durch eine schräge Bewegung von oben in Richtung 212 der Öffnung 206 des Regalpanels 200 in die Öffnung 206 eingesteckt. Dadurch hintergreift in der Figur 2c die Rastzunge 106 das Regalpanel 200.

In der Figur 2c wird daraufhin der Anschlag 100 durch eine Kippbewegung in Richtung 214, das heißt mit einer Kraftkomponente senkrecht zur Oberfläche des Regalpanels, bewegt. Dies führt dazu, dass der zweite Teil der Nase 110 mit der rechten Kante der Aussparung 210 in Berührung kommt. Durch den weiteren Bewegungsvorgang in Richtung 214 wird daraufhin die schräge Stützfläche 104 in Richtung der Anschlagfläche 102 gedrückt. Dies führt beim Übergang von Figur 2d zu 2e zu einem Überwinden der Kante zwischen dem zweiten Teil der Nase 110 und dem ersten Teil 116 der Nase (der Verlängerung) - die Nase wird insgesamt mit erstem 116 und zweitem Teil 110 nach links gedrückt. Es kommt zu einem Rastvorgang, bei welchem, wie in Figur 2e gezeigt, der Anschlag 100 fest mit dem Regalpanel 200 verrastet ist - hier ist die gesamte Nase wieder nach rechts "geschnappt". Die Verrastung kommt also dadurch zustande, dass der erste Teil 116 der Nase als Verlängerung der Stützfläche 104 von schräg unten gegen die Kante der Aussparung 210 drückt.

Wie in der Figur 2e ersichtlich, sitzt im verrasteten Zustand des Anschlags 100 der Anschlag 100 mit seinen Stützfüßen 100 flächig auf der Oberfläche des Regalpanels 200 auf. Ferner stützt sich der Anschlag 100 mit der Kante 216 der Anschlagfläche 102 ebenfalls von oben auf dem Regalpanel 200 ab. Diese Abstützung wird von unten durch die Rastzunge 106 gekontert.

Um nun mehrere Anschläge 100, welche nebeneinander an parallel verlaufenden Regalpanelen 200 angeordnet sind, miteinander stabil zu verbinden, ist in der Figur 3 die Verwendung eines Querverbinders 300 vorgesehen. Der Querverbinder 300 hat eine U-Form, wobei die U-Form so gewählt ist, dass die Schenkel der U-Form flächig auf der Anschlagfläche 102 und der Stützfläche 104 sowie der Verbindungsfläche 112 zu liegen kommen. Mittels entsprechender Befestigungselemente wie Schrauben, Nuten oder Rastmittel, kann der Querverbinder 300 mit den Aussparungen 114 des Anschlags 100 verbunden werden.

In der Figur 3 sind zwei parallel zueinander angeordnete Querverbinder 300 gezeigt, wobei der linke Querverbinder bereits mit den Anschlägen 100 fixiert ist und der rechte Querverbinder 300 wiederum durch eine Bewegung in Richtung 302, das heißt in Richtung der Regalpanele, auf die Anschläge 100 aufgesetzt werden kann. Auch hier ist es wiederum möglich, dass zwischen den Querverbindern 300 ein Sprinklerrohr 202, wie in Figur 2e gezeigt, aufgenommen werden kann.

Wird nun das Regal mit den Regalpanelen 200 mit Stückgut beschickt, kann dies sowohl aus Richtung 304 als auch aus Richtung 306 in Richtung der Anschläge 100 bzw. im Falle der Figur 3 in Richtung der Querverbinder 300 erfolgen. Selbst wenn das auf den Regalpanelen 200 abzusetzende Stückgut mit hohem Schwung gegen die Querverbinder 300 rammt, kann diese Kraft dennoch ohne Beschädigung der Anschläge 100 bzw. der Querverbinder 300 auf die Regalpanele 200 abgeleitet werden. Durch die Querverbinder 300 ergibt sich eine homogene Kraftverteilung auf alle Anschläge 100. Selbst wenn die Kraft nicht senkrecht auf die Querverbinder 300, das heißt exakt in Richtung 304 oder 306 wirkt, ist es möglich, auch bei seitlicher Kraftwirkung diese Kräfte ohne Beschädigung der Querverbinder 300 bzw. der Anschläge 100 auf die Regalpanele 200 abzuleiten.

In der Figur 4 ist eine Anordnung verschiedener Regalpanele 200 gezeigt, welche durch einen einzelnen Querverbinder 300 über hier nicht ersichtliche Anschläge miteinander verbunden sind.

Der Querverbinder 300 und die zugehörigen Anschläge bilden insgesamt ein sogenanntes Anschlagssystem, das heißt eine Art Baukastensystem, welches einem Endkunden bereitgestellt werden kann. Der Endkunde kann daraufhin verschiedene Anschläge 100 auf seinen Regalpanelen 200 befestigen und diese Endanschläge über den gemeinsamen Querverbinder 300 miteinander verbinden.

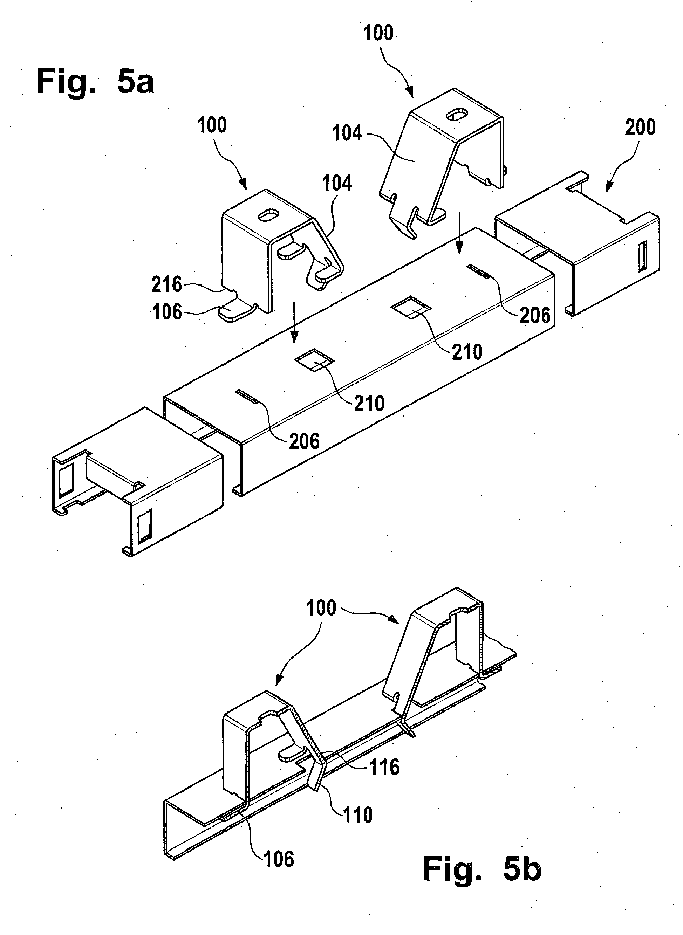

Die Figur 5 zeigt zwei bildhaft dargestellte Verfahrensschritte zur Montage eines Anschlags 100 an einem Regalpanel 200. Das Regalpaneel 200 weist hierzu für jeden Anschlag einen Satz von Aussparungen mit einem ersten Teil 206 und einem zweiten Teil 210 auf. Der erste Teil 206 dient zur Aufnahme der Rastzunge 106 des Anschlags 100 zur Fixierung des Anschlags in dem Paneel 200. Der zweite Teil 210 dient zur Aufnahme der Nase mit den beiden Teilen 116 und 110. Die in Erstreckungsrichtung des Paneels 200 gesehene Breite des ersten Teils 206 der Aussparungen entspricht im Wesentlichen der Materialdicke der Rastzunge 106.

Nachdem in Figur 5a die beiden Anschläge 100 in das Regalpaneel 200 eingesetzt wurden, ergibt sich die in Figur 5b gezeigte Situation. Die Figur 5b zeigt dabei einen Querschnitt durch die Anschläge 100 und das Regalpaneel 200. Deutlich sichtbar ist nun, dass zum einen der Teil 116 mit dem Regalpaneel 200 in der Aussparung 210 verrastet ist. Zum anderen liegt die Rastzunge 106 flächig von unten auf der Unterseite des Regalpaneels auf. Aufgrund der nahezu identischen besagten Breite der Aussparung 206 und der Dicke der Rastzunge 106 gibt es für die Rastzunge 106 im montierten Zustand kein Spiel für eine Bewegung in Erstreckungsrichtung des Regalpaneels - die Rastzunge 106 ist fest in der Aussparung 206 fixiert.

### Bezugszeichenliste

- 100: Anschlag
- 102: Anschlagfläche
- 104: Stützfläche
- 106: Rastzunge
- 108: Stützfuß
- 110: zweiter Teil der Nase
- 112: Verbindungsfläche
- 114: Aussparung
- 116: erster Teil der Nase
- 118: Mittelpunkt
- 120: Winkel
- 122: Winkel
- 200: Regalpanel
- 202: Sprinklerrohr
- 204: Zwischenraum
- 206: Aufnahme
- 210: Aufnahme
- 212: Richtung
- 214: Richtung
- 216: Kante
- 300: Querverbinder
- 302: Richtung
- 304: Richtung
- 306: Richtung

## Patentansprüche

1. Anschlag (100) für eine Auflage (200) eines Regals, wobei der Anschlag (100) eine Anschlagfläche (102) für auf der Auflage (200) zu lagerndes Stückgut und eine schräg von der Anschlagfläche (102) wegweisende Stützfläche (104) aufweist, wobei die Anschlagfläche (102) an ihrem Ende ein erstes Mittel (106) zur Fixierung des Anschlags an der Auflage (200) und die Stützfläche (104) an ihrem Ende ein zweites Mittel (110; 116) zur Fixierung des Anschlags an der Auflage (200) aufweist, wobei an dem Ende der Stützfläche (104) zumindest zwei voneinander beabstandete Stützfüße (108) angeordnet sind, wobei die Stützfüße (108) zur Abstützung des Anschlags (100) auf der Auflage (200) ausgebildet sind, **dadurch gekennzeichnet, dass** die Enden der Stützfüße (108) zur Anschlagfläche (102) hin weisen, und dass es sich bei dem zweiten Mittel (110, 116) zur Fixierung des Anschlags (100) um eine an der Stützfläche (104) angeordnete zweiteilige Nase handelt, wobei der erste Teil (116) der Nase durch eine Verlängerung der Stützfläche (104) gebildet wird, wobei der zweite Teil (110) der Nase an der Verlängerung angeordnet ist und in Richtung der durch die Anschlagfläche (102) gebildeten Ebene weist.

2. Anschlag (100) nach Anspruch 1, wobei zwischen den Stützfüßen (108) das zweite Mittel (110; 116) zur Fixierung des Anschlags angeordnet ist.

3. Anschlag (100) nach Anspruch 1 oder 2, wobei sich die Verlängerung (116) parallel zur Stützfläche (104) erstreckt.

4. Anschlag (100) nach einem der vorigen Ansprüche, wobei die Stützfläche (104) und die Stützfüße (108) einen ersten Winkel (120) einschließen, wobei ein zwischen der Verlängerung und dem zweiten Teil der Nase gebildeter zweiter Winkel (122) einen Wert aufweist, welcher zwischen dem Wert des ersten Winkels (120) und dem Wert des ersten Winkels (120) plus 90 Grad liegt.

5. Anschlag (100) nach einem der vorigen Ansprüche, wobei die Enden des zweiten Teils (110) der Nase abgerundet sind, wobei die Abrundung des zweiten Teils der Nase durch zumindest einen Mittelpunktswinkel beschreibbar ist, wobei sich der zu dem Mittelpunktswinkel zugehörige Mittelpunkt (118) auf der Erstreckungsfläche des zweiten Teils (110) der Nase befindet.

6. Anschlag (100) nach einem der vorigen Ansprüche, wobei das erste Mittel (116) zur Fixierung des Anschlags eine Rastzunge (106) umfasst, wobei die Rastzunge (106) von der Stützfläche (104) wegweisend an dem Ende der Anschlagfläche (102) ausgeformt ist.

7. Anschlag (100) nach Anspruch 6, wobei die Enden der Rastzunge (106) abgerundet sind, wobei die Abrundung der Rastzunge (106) durch zumindest einen Mittelpunktswinkel beschreibbar ist, wobei sich der zu dem Mittelpunktswinkel zugehörige Mittelpunkt (118) auf der Erstreckungsfläche der Rastzunge (106) befindet.

8. Anschlag (100) nach Anspruch 6 oder 7, wobei sich seitlich von der Rastzunge (106) jeweils freie Enden (216) der Anschlagfläche (102) befinden.

9. Anschlag (100) nach einem der Ansprüche 6-8, wobei zwischen der Anschlagfläche (102) und der Rastzunge (106) ein dritter Winkel gebildet ist, wobei der dritte Winkel einen Wert zwischen 90 Grad und 130 Grad aufweist.

10. Anschlag (100) nach einem der vorigen Ansprüche, wobei die Anschlagfläche (102) und die Stützfläche (104) ausschließlich über eine Verbindungsfläche (112) miteinander verbunden sind, wobei die Verbindungsfläche (112) ausschließlich an dem Ende der Anschlagfläche (102), welches von dem ersten Mittel (106) zur Fixierung des Anschlags abgewandt ist und dem Ende der Stützfläche (104), welches von dem zweiten Mittel (110; 116) zur Fixierung des Anschlags abgewandt ist, angeordnet ist.

11. Anschlag (100) nach Anspruch 10, wobei es sich bei der Verbindungsfläche (112) um eine relativ zu den Stützfüßen (108) waagerechte Verbindungsfläche (112) handelt.

12. Anschlag (100) nach Anspruch 10 oder 11, wobei die Verbindungsfläche (112) eine Aussparung (114) aufweist, wobei die Aussparung zur Fixierung eines Querverbinders (300) ausgebildet ist zur Verbindung mehrerer Anschläge (100) untereinander.

13. Anschlag (100) nach einem der vorigen Ansprüche, wobei es sich bei dem Anschlag (100) um ein Metall-Biegeteil handelt.

14. Anschlag (100) nach einem der vorigen Ansprüche, wobei es sich bei der Auflage um ein Regalpaneel (200) oder um eine Tiefenauflage oder um eine Winkelauflage handelt.

15. Auflage (200) mit einem Anschlag (100) gemäß einem der vorigen Ansprüche wobei die Auflage (200) erste Aussparungen (206; 210) aufweist, zur rastenden Aufnahme des Anschlags.

16. Auflage (200) nach Anspruch 15, wobei jede der ersten Aussparungen einen ersten Teil (206) und einen zweiten Teil (210) aufweist, wobei der erste Teil (206) zur Aufnahme des ersten Mittels (106) zur Fixierung des Anschlags und der zweite Teil zur Aufnahme des zweiten Mittels (110; 116) ausgeformt ist, wobei in Richtung vom ersten zum zweiten Mittel hin gesehen die breite des ersten Teils (206) der Aussparung der Materialdicke des ersten Mittels (106) entspricht.

17. Auflage (200) nach Anspruch 16, ferner mit zweiten Aussparungen (206; 210) zur rastenden Aufnahme eines weiteren Anschlags (100) gemäß einem der vorigen Ansprüche 1-14, wobei die ersten und die zweiten Aussparungen (206; 210) so zueinander angeordnet sind, dass die Stützflächen (104) der aufzunehmenden Anschläge (100) einander unmittelbar gegenüber liegen, wobei die ersten und zweiten Aussparungen (206; 210) so beabstandet sind, um ein Sprinklerrohr (202) zwischen den aufzunehmenden Anschlägen (100) und der Auflage (200) aufzunehmen.

18. Querverbinder (300) mit mehreren Anschlägen (100) gemäß einem der vorigen Ansprüche 1-14.

19. Querverbinder (300) nach Anspruch 18, wobei der Querverbinder (300) eine U-Form aufweist, wobei die Schenkel des Querverbinders (300) zur vollflächigen Auflage auf der Anschlagfläche (102) und Stützfläche (104) geformt sind.

20. Anschlagsystem umfassend einen Querverbinder (300) gemäß einem der Ansprüche 18 oder 19.

## Claims

1. Stop (100) for a support (200) of a shelf unit, wherein the stop (100) has a contact surface (102) for individual items to be stored on the support (200), and a support surface (104) that faces away, at a slant, from the contact surface (102), wherein the contact surface (102) has a first means (106) for fixation of the stop on the support (200) at its end, and the support surface (104) has a second means (110; 116) for fixation of the stop on the support (200) at its end, wherein at least two support feet (108) spaced apart from one another are disposed at the end of the support surface (104), wherein the support feet (108) are configured for supporting the stop (100) on the support (200), **characterized in that** the ends of the support feet (108) face toward the contact surface (102), and that the second means (110, 116) for fixation of the stop (100) is a two-part projection disposed on the support surface (104), wherein the first part (116) of the projection is formed by an extension of the support surface (104), wherein the second part (110) of the projection is disposed on the extension and faces in the direction of the plane formed by the contact surface (102).

2. Stop (100) according to claim 1, wherein the second means (110; 116) for fixation of the stop is disposed between the support feet (108).

3. Stop (100) according to claim 1 or 2, wherein the extension (116) extends parallel to the support surface (104).

4. Stop (100) according to one of the preceding claims, wherein the support surface (104) and the support feet (108) enclose a first angle (120), wherein a second angle (122) formed between the extension and the second part of the projection has a value that lies between the value of the first angle (120) and the value of the first angle (120) plus 90 degrees.

5. Stop (100) according to one of the preceding claims, wherein the ends of the second part (110) of the projection are rounded off, wherein the rounding of the second part of the projection can be described by at least one center point angle, wherein the center point (118) that belongs to the center point angle is situated on the expanse surface of the second part (110) of the projection.

6. Stop (100) according to one of the preceding claims, wherein the first means (116) for fixation of the stop comprises an engagement tongue (106), wherein the engagement tongue (106) is formed on the end of the contact surface (102) facing away from the support surface (104).

7. Stop (100) according to claim 6, wherein the ends of the engagement tongue (106) are rounded off, wherein the rounding of the engagement tongue (106) can be described by at least one center point angle, wherein the center point (118) that belongs to the center point angle is situated on the expanse surface of the engagement tongue (106).

8. Stop (100) according to claim 6 or 7, wherein free ends (216) of the contact surface (102) are situated to the side of the engagement tongue (106), in each instance.

9. Stop (100) according to one of claims 6-8, wherein a third angle is formed between the contact surface (102) and the engagement tongue (106), wherein the third angle has a value between 90 degrees and 130 degrees.

10. Stop (100) according to one of the preceding claims, wherein the contact surface (102) and the support surface (104) are connected with one another exclusively by way of a connection surface (112), wherein the connection surface (112) is exclusively disposed at the end of the contact surface (102) that faces away from the first means (106) for fixation of the stop, and the end of the support surface (104) that faces away from the second means (110; 116) for fixation of the stop.

11. Stop (100) according to claim 10, wherein the connection surface (112) is a connection surface (112) horizontal relative to the support feet (108).

12. Stop (100) according to claim 10 or 11, wherein the connection surface (112) has a recess (114), wherein the recess is configured for fixation of a transverse connector (300), for connection of multiple stops (100) with one another.

13. Stop (100) according to one of the preceding claims, wherein the stop (100) is a bent metal part.

14. Stop (100) according to one of the preceding claims, wherein the support is a shelf panel (200) or a depth support or a bracket support.

15. Support (200) having a stop (100) according to one of the preceding claims, wherein the support (200) has first recesses (206; 210) for engaged accommodation of the stop.

16. Support (200) according to claim 15, wherein each of the first recesses has a first part (206) and a second part (210), wherein the first part (206) is shaped for accommodation of the first means (106) for fixation of the stop, and the second part for accommodation of the second means (110; 116), wherein the width of the first part (206) of the recess corresponds to the material thickness of the first means (106), viewed in the direction from the first toward the second means.

17. Support (200) according to claim 16, furthermore having two recesses (206; 120) for engaged accommodation of a further stop (100) according to one of the preceding claims 1-14, wherein the first and the second recesses (206; 210) are disposed relative to one another in such a manner that the support surfaces (104) of the stops (100) to be accommodated lie directly opposite one another, wherein the first and second recesses (206; 210) are spaced apart from one another in such a manner so as to accommodate a sprinkler pipe (202) between the stops (100) to be accommodated and the support (200).

18. Transverse connector (300) having multiple stops (100) according to one of the preceding claims 1-14.

19. Transverse connector (300) according to claim 18, wherein the transverse connector (300) has a U shape, wherein the shanks of the transverse connector (300) are shaped for full-area contact with the contact surface (102) and support surface (104).

20. Stop system comprising a transverse connector (300) according to one of claims 18 or 19.

## Revendications

1. Butée (100) pour une surface porteuse (200) d'une étagère, la butée (100) comportant une surface de butée (102) pour une marchandise à déposer sur la surface porteuse (200) et une surface d'appui (104) s'étendant de façon oblique à l'opposé de la surface de butée (102), la surface de butée (102) comportant un premier moyen (106) à son extrémité pour fixer la butée à la surface porteuse (200), et la surface d'appui (104) comportant un deuxième moyen (110 ; 116) à son extrémité pour fixer la butée à la surface porteuse (200), au moins deux pieds d'appui (108) espacés l'un de l'autre étant agencés à l'extrémité de la surface d'appui (104), les pieds d'appui (108) étant conçus pour l'appui de la butée (100) sur la surface porteuse (200), **caractérisée en ce que** les extrémités des pieds d'appui (108) sont dirigés vers la surface de butée (102), et **en ce que** le deuxième moyen (110 ; 116) destiné à fixer la butée (100) est un nez en deux parties agencé sur la surface d'appui (104), la première partie (116) du nez étant formée par un prolongement de la surface d'appui (104), la deuxième partie (110) du nez étant agencée sur le prolongement et dirigée vers le plan formé par la surface de butée (102).

2. Butée (100) selon la revendication 1, dans laquelle le deuxième moyen (110 ; 116) destiné à fixer la butée est agencé entre les pieds d'appui (108).

3. Butée (100) selon la revendication 1 ou 2, dans laquelle le prolongement (116) s'étend parallèlement à la surface d'appui (104).

4. Butée (100) selon l'une des revendications précédentes, dans laquelle la surface d'appui (104) et les pieds d'appui (108) incluent un premier angle (120), dans laquelle un deuxième angle formé entre le prolongement et la deuxième partie du nez présente une valeur comprise entre la valeur du premier angle (120) et la valeur du premier angle (120) plus 90 degrés.

5. Butée (100) selon l'une des revendications précédentes, dans laquelle les extrémités de la deuxième partie (110) du nez sont arrondies, l'arrondi de la deuxième partie du nez pouvant être décrit par au moins un angle au centre, le point central (118) correspondant à l'angle au centre étant situé sur la surface d'étalement de la deuxième partie (110) du nez.

6. Butée (100) selon l'une des revendications précédentes, dans laquelle le premier moyen (116) destiné à fixer la butée comprend une languette d'encliquetage (106), la languette d'encliquetage (106) étant formée à l'extrémité de la surface de butée (102), à l'opposé de la surface d'appui (104).

7. Butée (100) selon la revendication 6, dans laquelle les extrémités de la languette d'encliquetage (106) sont arrondies, l'arrondi de la languette d'encliquetage (106) pouvant être décrit par au moins un angle au centre, le point central (118) correspondant à l'angle au centre étant situé sur la surface d'étalement de la languette d'encliquetage (106).

8. Butée (100) selon la revendication 6 ou 7, dans laquelle des extrémités libres (216) respectives de la surface de butée (102) se trouvent sur le côté de la languette d'encliquetage (106).

9. Butée (100) selon l'une des revendications 6-8, dans laquelle un troisième angle est formé entre la surface de butée (102) et la languette d'encliquetage (106), le troisième angle présentant une valeur comprise entre 90 degrés et 130 degrés.

10. Butée (100) selon l'une des revendications précédentes, dans laquelle la surface de butée (102) et la surface d'appui (104) sont reliées l'une à l'autre exclusivement par une surface de liaison (112), la surface de liaison (112) étant agencée exclusivement à l'extrémité de la surface de butée (102) qui est détournée du premier moyen (106) destiné à fixer la butée, et à l'extrémité de la surface d'appui (104) qui est détournée du deuxième moyen (110 ; 116) destiné à fixer la butée.

11. Butée (100) selon la revendication 10, dans laquelle la surface de liaison (112) est une surface de liaison (112) horizontale par rapport aux pieds d'appui (108).

12. Butée (100) selon la revendication 10 ou 11, dans laquelle la surface de liaison (112) comporte un évidement (114), l'évidement étant conçu pour fixer un connecteur transversal (300), pour relier plusieurs butées (100) entre elles.

13. Butée (100) selon l'une des revendications précédentes, dans laquelle la butée (100) est une pièce métallique pliée.

14. Butée (100) selon l'une des revendications précédentes, dans laquelle la surface porteuse est un panneau d'étagère (200) ou un support en profondeur ou une équerre.

15. Surface porteuse (200) avec une butée (100) selon l'une des revendications précédentes, la surface porteuse (200) comportant des premiers évidements (205 ; 210) destinés à recevoir la butée par encliquetage.

16. Surface porteuse (200) selon la revendication 15, dans laquelle chacun des premiers évidements comporte une première partie (206) et une deuxième partie (210), la première partie (206) étant conçue pour recevoir le premier moyen (106) destiné à fixer la butée et la deuxième partie est conçue pour recevoir le deuxième moyen (110 ; 116), la largeur de la première partie (206) de l'évidement correspondant à l'épaisseur de matériau du premier moyen (106), vue dans la direction du premier vers le deuxième moyen.

17. Surface porteuse (200) selon la revendication 16, en outre avec des deuxièmes évidements (206 ; 210) destinés à recevoir par encliquetage une autre butée (100) selon l'une des revendications précédentes 1-14, dans laquelle les premiers et deuxièmes évidements (206 ; 210) sont agencés de telle façon les uns par rapport aux autres, que les surfaces d'appui (104) des butées (100) à loger sont directement opposées les uns aux autres, dans laquelle les premiers et deuxièmes évidements (206 ; 210) sont espacés de manière à recevoir un tuyau de Sprinkler (202) entre les butées (100) à loger et la surface porteuse (200).

18. Connecteur transversal (300) avec plusieurs butées (100) selon l'une des revendications précédentes 1-14.

19. Connecteur transversal (300) selon la revendication 18, le connecteur transversal (300) présentant une forme en U, les branches du connecteur transversal (300) étant formées de manière à s'appliquer entièrement sur la surface de butée (102) et la surface d'appui (104).

20. Système de butée comprenant un connecteur transversal (300) selon l'une des revendications 18 ou 19.
